# EUROPÄISCHE PATENTSCHRIFT

(11) **EP 4 605 277 B1**
(45) Veröffentlichungstag und Bekanntmachung des Hinweises auf die Patenterteilung: **11.11.2026**
(21) Anmeldenummer: 23776300.8
(22) Anmeldetag: 20.09.2023
(51) Int. Cl.: B60S 1/48, B60S 1/50, B60S 1/56, C25B 1/04, C07C 29/00, C02F 1/467

(54) **KRAFTFAHRZEUG MIT MEHREREN SENSOREN UND EINER REINIGUNGSEINRICHTUNG SOWIE VERFAHREN ZUM BETREIBEN EINER REINIGUNGSEINRICHTUNG**
MOTOR VEHICLE COMPRISING MULTIPLE SENSORS AND A CLEANING DEVICE, AND METHOD FOR OPERATING A CLEANING DEVICE
VÉHICULE AUTOMOBILE COMPRENANT PLUSIEURS CAPTEURS ET UN DISPOSITIF DE NETTOYAGE ET PROCÉDÉ DE FONCTIONNEMENT D'UN DISPOSITIF DE NETTOYAGE

(30) Priorität: 20.10.2022 DE 102022127721
(43) Veröffentlichungstag der Anmeldung: 27.08.2025
(73) Patentinhaber: AUDI AG, 85057 Ingolstadt (DE)
(72) Erfinder: HANISCH, Thomas, 91795 Dollnsteib (DE); HERBIG, Mike, 92339 Beilngries (DE); BUSCH, Martina, 85055 Ingolstadt (DE)
(86) Internationale Anmeldenummer: PCT/EP2023/075866
(87) Internationale Veröffentlichungsnummer: WO 2024/083428

(56) Entgegenhaltungen:
- US-A- 5 261 254
- US-A1- 2009 014 336
- US-A1- 2018 319 375
- US-A1- 2020 001 331

## Beschreibung

Die Erfindung betrifft ein Kraftfahrzeug mit mehreren Sensoren und einer Reinigungseinrichtung zum Aufbringen eines aus einem Fluidspeicher bezogenen Reinigungsfluids auf Wasserbasis auf die Sensoren.

Mit zunehmender Automatisierung und Autonomisierung von Kraftfahrzeugen steigt auch die Anzahl der Sensoren, die für die dazu gehörigen Technologien benötigt werden. Insbesondere am Kraftfahrzeug außenliegende Sensoren müssen zyklisch und je nach Verunreinigungsgrad gereinigt werden. Dadurch steigt natürlich auch der Verbrauch von benötigtem Wischwasser, im Folgenden auch Reinigungsfluid genannt. Dieser Verbrauch wurde bei Level-4-Kraftfahrzeugen auf ca. 10 Liter pro 450 km prognostiziert. Dabei muss der Nutzer des Kraftfahrzeugs nicht nur bedenken, regelmäßig das Wasser des Reinigungsfluids nachzufüllen, sondern auch, zumindest in kälterer Jahreszeit, ein geeignetes Frostschutzmittel zu beschaffen und dem Reinigungsfluid hinzuzufügen. Die Beschaffung ist aufwändig, da üblicherweise hierzu eine Tankstelle angefahren werden muss, so dass sie mitunter unterbleibt und kein Frostschutzmittel zugegeben wird, was dazu führen kann, dass das Reinigungsfluid vereist und eine Reinigung der Sensoren nicht mehr möglich ist. US-A1-2020/001331 offenbart den Oberbegriff des Anspruchs 1.

Der Erfindung liegt das Problem zugrunde, ein verbessertes Kraftfahrzeug anzugeben.

Zur Lösung des Problems weist ein Kraftfahrzeug der eingangs genannten Art eine elektro-katalytische Einheit zur Herstellung eines dem Reinigungsfluid als Additiv zuführbaren Endprodukts in Form eines Alkohols aus Wasser des Reinigungsfluids und Luft als Edukte auf.

Die Erfindung sieht eine im Kraftfahrzeug integrierte elektro-katalytische Einheit, mit der die on-board Herstellung eines Frostschutzmittels in Form eines Alkohols, der dem Reinigungsfluid zugebbar ist, vor. Dies unterstützt den Nutzer und vermeidet, dass der Nutzer das Frostschutzmittel separat beschaffen und vorhalten muss. Insbesondere, wenn, wie bevorzugt, der Alkohol dem Reinigungsfluid automatisch zugeführt wird, entfällt auch die manuelle Zugabe, so dass sichergestellt werden kann, dass das Reinigungsfluid nicht vereisen kann. Die Herstellung des Alkohols erfolgt aus dem Wasser des Reinigungsfluids, also einem Medium, das ohnehin fahrzeugseitig vorhanden ist.

In der elektro-katalytischen Einheit finden sowohl elektrolytische als auch katalytische Reaktionen statt. Für diese Reaktionen verfügt die Einheit über entsprechende Komponenten. Für die Elektrolyse werden wenigstens zwei Elektroden, eine Anode und eine Katode, die an einer Gleichspannungsquelle angeschlossen sind, benötigt. Für die Katalyse wird wenigstens ein Katalysator benötigt, der für die gewünschte Reaktion vorgesehen ist. Der elektro-katalytischen Einheit werden Edukte von außerhalb in die Einheit zugeführt. Bei diesen Edukten handelt es sich um Wasser aus dem Reinigungsfluid und Luft. Das Wasser wird in der elektro-katalytischen Einheit elektrolysiert, wobei Wasserstoff und Sauerstoff als Produkte der Elektrolyse entstehen. In mindestens einem katalytischen Prozess werden Wasserstoff aus der Elektrolyse, Sauerstoff aus der Elektrolyse oder der Luft sowie Kohlenstoffdioxid aus der Luft in einen Alkohol umgewandelt, zum Beispiel durch Katalyse oder Synthese. Dieser Alkohol wird aus der elektro-katalytischen Einheit abgeführt und dem Reinigungsfluid im Fluidspeicher als Additiv zugegeben, was manuell oder automatisch erfolgen kann. Als Additiv dient der Alkohol als Frostschutzmittel. Die Zugabe von Alkohol in das Reinigungsfluid bewirkt eine Erniedrigung des Gefrierpunktes des Reinigungsfluids. Da die Erfindung ein Reinigungsfluid auf Wasserbasis vorsieht, ist es von Vorteil, wenn der Alkohol eine unbegrenzte Mischbarkeit mit Wasser besitzt. Geeignete Alkohole wären Methanol, Ethanol und Propan-1-ol. Besonders vorteilhaft bei Alkohol als Additiv ist die Eigenschaft fettlösend zu sein, wodurch der Alkohol dem Reinigungsfluid einen weiteren positiven Reinigungseffekt verleiht.

Die elektro-katalytische Einheit wird bevorzugt in drei Reaktionskammern unterteilt, wobei die Reaktionskammern in eine Elektrolyse-Kammer sowie in eine erste Katalyse-Kammer und eine zweite Katalyse-Kammer oder Synthese-Kammer aufgeteilt sind. Dies hat den Vorteil, dass ein Vermischen der Edukte und Produkte in den einzelnen Reaktionsschritten unterbunden wird. Zudem können einzelne Reaktionskammern optimal auf die ausgewiesene Reaktion ausgelegt werden. Zum Beispiel können in einer der Katalyse-Kammern oder Synthese-Kammer entsprechende Reaktionstemperaturen sowie optimale Drücke bei Gasreaktionen eingestellt werden.

Als weitere Option können vorzugsweise die Reaktionskammern modular aufgebaut sein, so dass bei einer defekten Kammer nicht die ganze elektro-katalytische Einheit ausgebaut werden muss, sondern nur eine Kammer ausgetauscht wird, was die Wartung der elektro-katalytischen Einheit komfortabler gestalten würde.

In der Elektrolyse-Kammer werden bevorzugt Wasserstoff (H₂) und Sauerstoff (O₂) als Produkte aus dem Wasser (H₂O) des Reinigungsfluids hergestellt. Die Reaktionskammer beinhaltet zwei Elektroden, eine Kathode und eine Anode, die an einer Gleichstromquelle angeschlossen sind. Beide Elektroden sind in das in die Kammer geförderte Reinigungsfluid getaucht. Das Reinigungsfluid, welches komplett oder zumindest größtenteils aus Wasser besteht, wird bei der Elektrolyse in Gase zersetzt. Folgende Gesamtreaktion findet dabei statt:

2H₂O (f) → 2H₂ (g) + O₂ (g),

wobei (f) den flüssigen und (g) den gasförmigen Zustand der Stoffe anzeigt. Hierbei entsteht an der Katode Wasserstoff (H₂) und an der Anode Sauerstoff (O₂). Optional kann die Elektrolyse-Kammer ähnlich einem Hoffmann'schen Wasserzersetzungsapparat aufgebaut sein. Dabei befinden sich die beiden Elektroden in unterschiedlichen Teilkammern und die gasförmigen Produkte steigen dann in diesen unterschiedlichen Teilkammern auf und können dabei separat aufgefangen werden. An der Elektrolyse-Kammer befindet sich auch eine entsprechende Leitung für das zuzuführende Reinigungsfluid, welches vom Fluidspeicher in die Elektrolyse-Kammer führt, sowie eine Leitung für den Wasserstoff (H₂), die von der Elektrolyse-Kammer in eine nachgeschaltete erste Katalyse-Kammer führt, sowie optional eine Leitung für Sauerstoff (O₂), die von der Elektrolyse-Kammer in eine nachgeschaltete zweite Katalyse-Kammer oder Synthese-Kammer führt.

In der ersten Katalyse-Kammer wird in Weiterbildung der Erfindung ein Alkan (CₙH₂ₙ₊₂) als Produkt aus Kohlenstoffdioxid (CO₂) aus der Luft und Wasserstoff (H₂) aus der Elektrolyse-Kammer als Edukte hergestellt. Die erste Katalyse-Kammer beinhaltet einen Katalysator, welcher für die vorgesehene Reaktion geeignet ist. In dieser Kammer reagieren zwei gasförmige Edukte zu zwei gasförmigen Produkten, wobei Sauerstoff (O₂) ein Nebenprodukt ist, welches aber optional im späteren Prozess weiter benutzt werden kann, weshalb in diesem Fall eine Trennung der Produkte nicht zwingend notwendig ist. Die Edukte strömen von einer Seite in die Katalyse-Kammer durch den Katalysator, wobei am anderen Ende der Kammer die Produkte aus der Kammer gezogen werden. Es findet folgende Gesamtreaktion in der ersten katalytischen Kammer statt:

nCO₂ (g) + n+1H₂ (g) → CₙH₂ₙ₊₂ (g) + nO₂ (g).

Erwähnenswert hierbei ist, dass Methan (n=1) und Ethan (n=2) leichter als Kohlenstoffdioxid sind und in Abwesenheit von Luftverwirbelung über dem Kohlenstoffdioxid aufsteigen. Dadurch könnten die genannten Gase am oberen Ende der Kammer aufgefangen werden. Die erste Katalyse-Kammer ist mit Leitungen zu den anderen Reaktionskammern jeweils verbunden. Bei diesen Leitungen handelt es sich zum einen um eine Wasserstoffleitung, die aus der Elektrolyse-Kammer kommt sowie eine Leitung, die aus der ersten Katalyse-Kammer für das Alkan und den Sauerstoff in die zweite Katalyse-Kammer oder Synthese-Kammer führt. Zusätzlich ist an der ersten katalytischen Kammer eine Leitung vorgesehen, die aus der elektro-katalytischen Kammer herausführt, um Kohlenstoffdioxid aus der Umgebungsluft in die erste Katalyse-Kammer zu fördern. Um die Ausbeute der katalytischen Reaktion zu erhöhen, also das Reaktionsgleichgewicht in Richtung der Produkte zu schieben, kann die Katalyse-Kammer so gestaltet sein, dass die Kammer selbst oder der Katalysator beheizbar ist. Zudem kann es für das Reaktionsgleichgewicht vom Vorteil sein, dass neben höheren Temperaturen auch höhere Drücke in der Kammer realisiert werden können.

In der zweiten Katalyse-Kammer oder Synthese-Kammer kann in Weiterbildung der Erfindung ein Alkohol als Produkt (CₙH₂ₙ₊₂O) aus einem Alkan (CₙH₂ₙ₊₂), hergestellt in der ersten Katalyse-Kammer, und aus Sauerstoff (O₂) aus der Luft und/oder Elektrolyse-Kammer und/oder Katalyse-Kammer als Edukte hergestellt werden. Die zweite Katalyse-Kammer oder Synthese-Kammer beinhaltet einen Katalysator, der für die dort stattfindende Reaktion vorgesehen ist. In dieser Reaktionskammer reagieren zwei gasförmige Edukte zu einem flüssigen Produkt, wobei hier das Produkt auch das Endprodukt der elektro-katalytischen Einheit darstellt. Hierbei strömen von einer Seite die Edukte in die Katalyse-Kammer oder Synthese-Kammer durch einen Katalysator und reagieren gemäß folgender Gesamtreaktionsgleichung:

2CₙH₂ₙ₊₂ (g) + O₂ (g) → 2CₙH₂ₙ₊₂O (f).

Das flüssige Endprodukt, ein Alkohol, kann sich unten in der Kammer ansammeln. Besonders vorteilhaft ist hierbei, wenn der Kammerboden wie ein Trichterboden ausgebildet ist oder der Kammerboden eine Schräge aufweist, welche sich zu einer Ecke hin absenkt. Dies vereinfacht das Aufsammeln der Flüssigkeit und die Überführung in die Flüssigkeitsleitung für die Zuführung zum Fluidspeicher. Zusätzlich zu der Alkan- und Sauerstoffleitung aus der ersten Katalyse-Kammer kommt noch eine Leitung für zuzuführende Luft hinzu, bevorzugterweise eine, die aus der elektro-katalytischen Kammer führt. Um die Ausbeute der katalytischen Reaktion oder Synthese zu erhöhen, also das Reaktionsgleichgewicht in Richtung der Produkte zu schieben, kann die Katalyse-Kammer oder Synthese-Kammer selbst oder der Katalysator beheizbar sein. Auch kann die Reaktionskammer so ausgelegt sein, so dass höhere Drücke realisiert werden können.

Zusätzlich zu der elektro-katalytischen Einheit kann eine Speicherkammer zum Einspeichern des erzeugten Alkohols vorgesehen sein. Dies hat den Vorteil, dass, wenn der Füllstand des Fluidspeichers so niedrig ist, dass kein Alkohol mehr produziert werden kann, dem Fluidspeicher trotzdem gespeicherter Alkohol bei Bedarf zugeführt werden kann. Auch wenn das Reinigungsfluid bereits genügend Frostschutzmittel enthält, was, worauf nachfolgend noch eingegangen wird, z.B. messtechnisch erfasst werden kann, kann eine Zufuhr unterbleiben. Falls ein solcher Speicher vorgesehen ist, kann der Nutzer in so einem Fall über einen Menüpunkt in der Bordkonsole oder einen Knopfdruck eine Vorratsproduktion des Alkohols veranlassen. Selbstverständlich ist die Speicherkammer über Leitungen mit der zweiten Katalyse-Kammer oder Synthese-Kammer und dem Fluidspeicher verbunden.

In einer bevorzugten Ausführung werden eine oder mehrere Pumpen zum Fördern der Edukte, der Produkte und des Endprodukts vorgesehen, wobei eine Pumpe oder ein Teil der Pumpen als Dosierpumpen dienen. Für diese Art der Förderung sind insbesondere Verdrängerpumpen geeignet, insbesondere Membranpumpen, wobei diese sich auch als Dosierpumpen eignen. Die Leitungen zwischen Fluidspeicher und elektro-katalytischer Einheit und elektro-katalytischer Einheit zum Fluidspeicher und jede anderen Leitung, bei der eine Dosierung von Flüssigkeiten oder Gasen sinnvoll erscheint, sollten mit Dosierpumpen versehen sein.

Der Fluidspeicher kann einen Sensor aufweisen, über den der Alkoholanteil im Reinigungsfluid erfassbar ist. In Abhängigkeit eines Ermittlungsergebnisses des Sensors wird die Alkoholherstellung in der elektro-katalytischen Einheit gesteuert. Falls der Alkoholanteil im Reinigungsfluid unterhalb eines bestimmten Schwellenwerts liegt, welcher in einer den Betrieb steuernden Steuerungseinrichtung abgelegt ist, wird die Produktion der benötigten Menge an Alkohol gestartet. Hierfür wird eine geeignete Menge an Reinigungsfluid dem Fluidspeicher entnommen, welches dann in Alkohol umgewandelt werden soll. Sollte der ermittelte Alkoholanteil im Reinigungsfluid über einen gewissen Schwellenwert, welcher in der Steuerungseinrichtung abgelegt ist, liegen, besteht kein Bedarf mittels der elektro-katalytische Einheit Alkohol herzustellen. Die Alkoholherstellung für die sofortige Gabe in den Fluidspeicher geschieht hierbei automatisiert über eine Steuerungseinrichtung, die entsprechenden Komponenten ansteuert. Die Steuerungseinrichtung kann beispielsweise mit einer Kommunikationsschnittstelle verbunden sein. Über drahtlose Übertragungsverfahren kann die Kommunikationsschnittstelle auf Wetterdaten zugreifen und diese der Steuerungseinrichtung übermitteln und damit den Alkoholgehalt des Reinigungsfluids an das prognostizierte Wetter anpassen. Damit können unübliche Kälteperioden oder Tiefsttemperaturen in Betracht gezogen werden. Denkbar ist es auch, dass der Nutzer über ein Bedienelement eines Infotainmentsystems eine geplante Reise vorerfassen kann und anhand der geographisch vorliegenden, zu erwartenden Wetterereignisse der Alkoholanteil im Frostschutzmittel angepasst werden kann, beispielsweise bei einer Urlaubsfahrt in die Alpen.

Der Fluidspeicher kann bevorzugt einen Füllstandssensor aufweisen, über den der Füllstand des Fluidspeichers erfassbar ist. Denn ohne ausreichendes Reinigungsfluid kann die Sauberkeit der Sensoren, insbesondere der außenliegenden, nicht gewährleistet werden. Da verunreinigte Sensoren auch nur bedingt funktional sind, müssten dann hochautomatisierte Fahrfunktionen abgeschaltet werden. Um dies zu verhindern, wird in Abhängigkeit eines Erfassungsergebnisses des Sensors ein optisches und/oder akustisches Signal für den Nutzer des Fahrzeugs ausgegeben. Beispielsweise kann eine Füllstandsinformation über ein Display als relative Füllstandsanzeige angezeigt werden, wobei 100% ein voller Fluidspeicher ist und 0% ein leerer Fluidspeicher. Des Weiteren kann, wenn ein gewisser Füllstand erreicht wird, beispielsweise 25%, der Nutzer daran erinnert werden, den Fluidspeicher wieder mit Wasser aufzufüllen. Eine vorteilhafte Weiterbildung kann auch sein, dass der Reinigungsfluidverbrauch extrapoliert werden kann und dem Nutzer angezeigt wird, für wie viele Kilometer ihm der Füllstand ausreicht, bis er das Wasser nachfüllen muss. Bei zu niedrigem Füllstand kann auch eine Entnahme von Reinigungsfluid zum Zweck der Alkoholherstellung unterbleiben, d.h., dass auch die Entnahme letztlich in Abhängigkeit des Füllstands gesteuert werden kann.

In einer Weiterbildung der Erfindung kann wenigstens eine Auffangvorrichtung zum Auffangen von Wischwasser beim Reinigen der Sensoren und/oder Kondenswasser am Verdampfer der Klimaanlage und/oder Regenwasser vorgesehen sein, wobei dieses Wasser dem Fluidspeicher zuführbar ist. Diese Weiterbildung hat den Vorteil, dass der Nutzer nicht mehr so oft Wasser in den Fluidspeicher nachfüllen muss. Damit könnte sich die Anzahl der Stopps, um Wasser aufzufüllen, erheblich reduzieren. Bei einem Außensensor beispielsweise kann eine rinnenartige Auffangvorrichtung im Bereich des Außensensors vorgesehen sein, die das ablaufende Reinigungsfluid sammelt und die über eine Leitung mit dem Fluidspeicher verbunden ist. Das Kondenswasser am Verdampfer einer Klimaanlage kann mit einem Sammelbecken unterhalb des Verdampfers aufgesammelt und dem Fluidspeicher zugeführt werden. Das Regenwasser kann in Form einer Auffangrinne z.B. am unteren Rand einer Windschutzscheibe aufgesammelt werden, wobei erste Verunreinigungen des Wassers mithilfe eines Filters, z.B. einer Zeolithschicht filtriert werden können.

Der Fluidspeicher kann einen Eingang oder mehrere Eingänge und einen Ausgang oder mehrere Ausgänge aufweisen, wobei dem Eingang oder zumindest einem Teil der Eingänge und dem Ausgang oder zumindest einem Teil der Ausgänge ein Flüssigkeitsfilter zugeordnet ist. Gerade bei aufgefangenem Wasser und/oder rezykliertem Reinigungsfluid können Verunreinigungen mit aufgefangen werden. Um eine Akkumulation von Verunreinigungen im Reinigungsfluid und insbesondere im Fluidspeicher zu unterbinden, können an geeigneten Stellen Flüssigkeitsfilter angebracht werden. Auch ist es von Vorteil sein, wenn keine Verunreinigungen in die elektro-katalytische Einheit gelangen. Verunreinigungen in der elektro-katalytischen Einheit können unter anderem für verstopfte Leitungen, Fehlreaktionen und kaputte Katalysatoren sorgen. Diesbezüglich kann es auch von Vorteil sein, nicht nur die Flüssigkeiten zu filtrieren, sondern auch die eingesaugte Außenluft.

Neben dem erfindungsgemäßen Kraftfahrzeug betrifft die Erfindung auch ein Verfahren zum Betreiben einer Reinigungseinrichtung zur Reinigung von Sensoren eines Kraftfahrzeugs, bei dem in einer elektro-katalytischen Einheit ein dem Reinigungsfluid als Additiv zuzuführendes Endprodukt in Form eines Alkohols aus Wasser des Reinigungsfluids und Luft als Edukte hergestellt wird.

Bevorzugt finden in der elektro-katalytischen Einheit wenigstens zwei Prozesse statt, wobei in der elektro-katalytischen Einheit wenigstens ein Elektrolyse-Prozess und wenigstens ein Katalyse-Prozess beziehungsweise Synthese-Prozess durchgeführt wird.

In einer Weiterbildung des Verfahrens, finden in der elektro-katalytischen Einheit drei Prozesse statt: ein Elektrolyse-Prozess, ein erster Katalyse-Prozess und ein zweiter Katalyse-Prozess oder Synthese-Prozess. Die Unterteilung in mehreren Prozessschritten hat den Vorteil, dass für jeden Prozessschritt optimale Reaktionsbedingungen geschaffen werden können um eine hohe Ausbeute und/oder hohe Herstellungsgeschwindigkeiten zu erreichen. Bei dem Elektrolyse-Prozess werden Sauerstoff und Wasserstoff aus Wasser hergestellt, wobei das dafür benötigte Wasser aus dem Reinigungsfluid stammt. Im ersten Katalyse-Prozess reagieren Kohlenstoffdioxid bezogen aus der Luft, und Wasserstoff aus dem Elektrolyse-Prozess miteinander zu einem Alkan. Der Alkan wird in einem zweiten Katalyse-Prozess oder Synthese-Prozess mit Sauerstoff, der entweder aus dem Elektrolyse-Prozess oder als Nebenprodukt aus der Alkanherstellung oder aus der Luft stammt, zu einem Alkohol umgewandelt. Der hergestellte Alkohol wird dann dem Reinigungsfluid im Fluidspeicher zugeführt.

Zusätzlich kann ein Alkoholanteil im Reinigungsfluid ermittelt werden, wobei in Abhängigkeit des Ermittlungsergebnisses die Herstellung des Alkohols in der elektro-katalytischen Einheit gesteuert wird. Liegt der Alkoholanteil im Reinigungsfluid unterhalb eines Schwellenwerts, welcher in der Steuereinrichtung abgelegt ist, wird der Herstellungsprozess für die benötigte Menge an Alkohol gestartet. Dies geschieht automatisch. Zudem kann die Herstellung des Alkohols, sofern eine Speicherungsmöglichkeit für den Alkohol besteht, vom Nutzer selbst per Knopfdruck oder Bedienung eines Menüpunkts gestartet werden und der produzierte Alkohol wird auf Vorrat gehalten.

Der Füllstand des Fluidspeichers kann messtechnisch ermittelt werden, wobei in Abhängigkeit des Ermittlungsergebnisses ein optisches und/oder akustisches Signal an den Nutzer ausgegeben wird. Auch kann in einer Weiterbildung des Verfahrens der Füllstand dem Nutzer angezeigt werden.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: eine Prinzipdarstellung eines Ausführungsbeispiels einer erfindungsgemäßen Vorrichtung, und
- Fig. 2: eine Prinzipdarstellung einer beispielhaften Ausführung einer elektro-katalytischen Einheit.

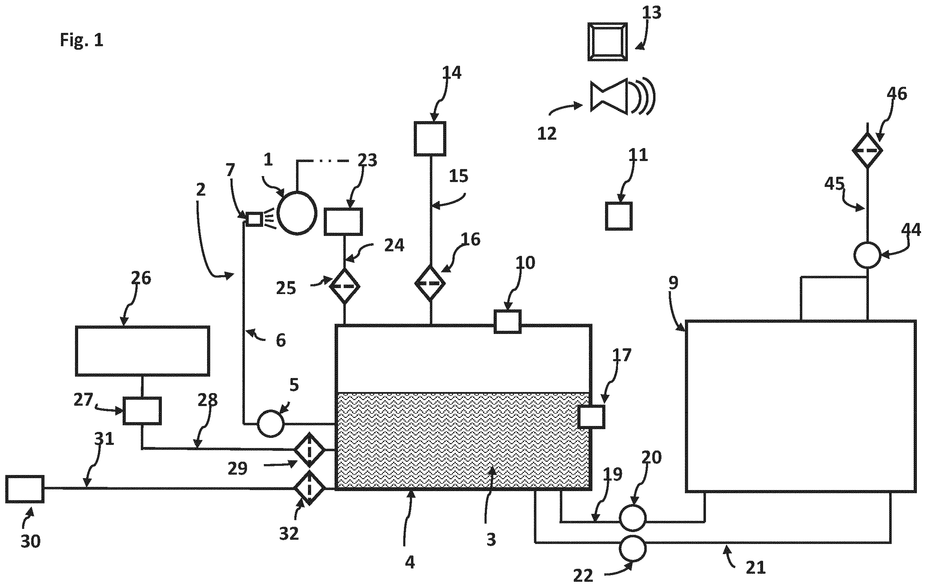

An einem nicht im Detail gezeigten Kraftfahrzeug mit einem Fahrassistenzsystem und/oder hochautomatisierten Fahrfunktionen befinden sich eine Vielzahl von Sensoren 1, die an der Außenseite des Fahrzeugs angeordnet sind und z.B. der Aufnahme von Informationen aus dem Fahrzeugumfeld dienen. Diese Sensoren 1 sind unterschiedlichen Witterungsbedingungen, Staub, Dreck und anderen Verschmutzungen ausgesetzt, so dass es zur Bildung eines Belags auf den Sensoren bis hin zu einem Zusetzen kommen kann. Um weiterhin die Funktion dieser Sensoren 1 gewährleisten zu können, müssen diese regelmäßig und in Abhängigkeit des Verschmutzungsgrades gereinigt werden. Für diese Reinigung ist eine kraftfahrzeugseitige Reinigungseinrichtung 2 vorgesehen, wie in Fig. 1 dargestellt. Dafür wird ein auf Wasser basierendes Reinigungsfluid 3 aus einem Fluidspeicher 4 gezogen und mithilfe einer Pumpe 5 über Leitungen 6 in eine Spritzdüse 7 transportiert. Die Spritzdüse 7 reinigt dann den Außensensor 1 über einen gewissen Fluiddruck und auch über die Reinigungswirkung des Reinigungsfluids 3.

Weil das Kraftfahrzeug über mehrere Sensoren 1 verfügt, ist ein hoher Reinigungsbedarf vorhanden. Dieser hohe Reinigungsbedarf hat auch einen hohen Reinigungsfluidverbrauch als Konsequenz. Dementsprechend muss der Nutzer des Kraftfahrzeugs in regelmäßigen Abständen eine größere Menge an Reinigungsfluid 3 dem Fluidspeicher 4 zuführen. Dabei sollte nicht nur Wasser dem Fluidspeicher 4 zugeführt werden, sondern, zumindest in der kälteren Jahreszeit, auch eine entsprechende Menge an Frostschutzmittel. Als Frostschutzmittel kann hierbei ein Alkohol 8 genutzt werden, der dem Reinigungsfluid 3 als Additiv beigemengt wird. Der Alkohol 8 wird kraftfahrzeugseitig und nach Bedarf hergestellt. Die Herstellung wird über eine fahrzeugseitig integrierte elektro-katalytische Einheit 9 ermöglicht. Für die Herstellung des Alkohols 8 in der elektro-katalytischen Einheit 9 bedarf es nur des Wassers im Reinigungsfluid 3 und Luft, wobei bevorzugterweise die Umgebungsluft genutzt wird.

Vorgesehen ist ferner eine Steuerungseinrichtung 11, die den Betrieb der elektro-katalytischen Einrichtung sowie der sonstigen, im System eingebundenen Komponenten steuert und mit den entsprechende, in das System eingebundenen Sensoren, Pumpen, Ventilen etc. korrespondiert.

Ein am Fluidspeicher 4 angebrachter Füllstandssensor 10 ermittelt den Füllstand des Fluidspeichers 4. Dabei kann in Abhängigkeit eines Ermittlungsergebnisses ein akustisches Signal über einen geeigneten Lautsprecher 12 oder dergleichen und/oder ein optisches Signal über ein Anzeigeeinrichtung 13 wie ein Display oder eine Leuchte oder dergleichen an den Nutzer weitergegeben werden. Dieses Signal kann ein Warnsignal sein, das dem Nutzer anzeigt, dass der Füllstand unter einem gewissen Schwellenwert liegt, beispielsweise 25% Füllstand, und ein zeitnahes Betanken des Fluidspeichers 4 mit Wasser erforderlich ist. Auch ist es vorteilhaft, wenn der Nutzer des Kraftfahrzeugs jederzeit über den aktuellen Füllstand des Fluidspeichers 4 informiert wird. Diese Information kann hierbei über eine Anzeige auf dem Armaturenbrett oder über einen Bildschirm in der Mittelkonsole angezeigt werden. Nicht nur kann dann ein aktueller Füllstand des Fluidspeichers 4 angezeigt werden, sondern es kann auch ein prognostizierter Verbrauch ermittelt werden, so dass dem Nutzer angezeigt wird, für wie viele Kilometer die Füllung des Fluidspeichers 4 reicht.

Muss der Fahrer den Fluidspeicher 4 mit Wasser betanken, so geschieht das über eine Tanköffnung 14. Diese Tanköffnung 14 kann beispielsweise mit einem Schraub- oder Steckanschluss, um eine Wasserleitung an das Kraftfahrzeug anzuschließen, versehen sein. In der Leitung 15, die die Tanköffnung 14 mit dem Fluidspeicher 4 verbindet, befindet sich gegebenenfalls ein Flüssigkeitsfilter 16, um Verunreinigungen aus dem Wasser zu entfernen. Wird frisches Wasser in den Fluidspeicher 4 dem Reinigungsfluid 3 zugeführt, so ändert sich natürlich auch die Konzentration des gegebenenfalls bereits im Reinigungsfluid 3 befindlichen Alkohols 8. Um zu überprüfen, ob die Alkoholkonzentration im Reinigungsfluid 3 über einem gewissen Schwellenwert liegt, ist am Fluidspeicher 4 ein Alkoholsensor 17 vorgesehen. Der Alkoholsensor 17 ermittelt die Alkoholkonzentration des Reinigungsfluids 3. Sollte sich die Alkoholkonzentration unterhalb einer gegebenen Grenze befinden, startet die mit dem Alkoholsensor 17 kommunizierende Steuerungseinrichtung 11 den Herstellungsprozess in der elektro-katalytische Einheit 9. Dabei wird über eine Leitung 19 und eine Dosierpumpe 20 ist, eine bestimmte Menge des Reinigungsfluids 3 der elektro-katalytischen Einheit 9 zugeführt. In der elektro-katalytischen Einheit 9 wird dann aus dem Reinigungsfluid 3 und aus Luft ein Alkohol 8 hergestellt, wie nachfolgend noch beschrieben wird. Dieser als Frostschutzmittel dienende Alkohol 8 wird dann über eine weitere Leitung 21 und eine Dosierpumpe 22 wieder dem Fluidspeicher 4 zugeführt.

In diesem Beispiel kann das Wasser nicht nur vom Nutzer manuell dem Fluidspeicher 4 über die Tanköffnung 14 zugeführt werden, sondern kann das Kraftfahrzeug selbst über Auffangvorrichtungen Wasser auffangen, um es dann dem Fluidspeicher 4 zuzuführen. Zum einen kann über eine Auffangvorrichtung 23 am Außensensor 1 das schon benutzte Reinigungsfluid 3 aufgefangen werden. Dies kann über kleine Auffangrinnen um den Außensensor 1 herum geschehen. Zweckmäßigerweise wird das aufgefangene Wasser und/oder Reinigungsfluid 3, bevor es über eine Leitung 24 in den Fluidspeicher 4 gelangt, durch einen Flüssigkeitsfilter 25 geführt, damit keine Verunreinigungen in den Fluidspeicher 4 und ins Reinigungsfluid 3 gelangen können. Im gezeigten Ausführungsbeispiel ist auch das Auffangen des Kondenswassers am Verdampfer 26 vorgesehen, wobei sich unterhalb des Verdampfers 26 ein Sammelbecken 27 befindet, um Kondenswasser aufzufangen. Auch dieses Wasser wird, bevor es über eine Leitung 28 in den Fluidspeicher 4 gelangt, über einen Flüssigkeitsfilter 29 filtriert. Auch ist ein Auffangen von Regenwasser vorgesehen, bevorzugterweise das Regenwasser von der Windschutzscheibe, wobei sich eine Auffangrinne 30 am unteren Ende der Windschutzscheibe befindet, so dass das Regenwasser mithilfe der Scheibenwischer in die Auffangrinne 30 gewischt werden kann. In dieser Auffangrinne 30 kann sich z. B. ein Zeolithfilter befinden, so dass das Regenwasser schon vom groben Schmutz vorfiltriert wird. Nichtsdestotrotz befindet sich in der Leitung 31 der Auffangrinne des Regenwassers zum Fluidspeicher 4 ein Flüssigkeitsfilter 32, um auch noch den letzten Schmutz vom Wasser zu trennen. Diese zusätzlichen Auffangvorrichtungen haben zur Folge, dass der Kraftfahrzeugnutzer weniger Stopps zur Befüllung des Fluidspeichers 4 einplanen muss.

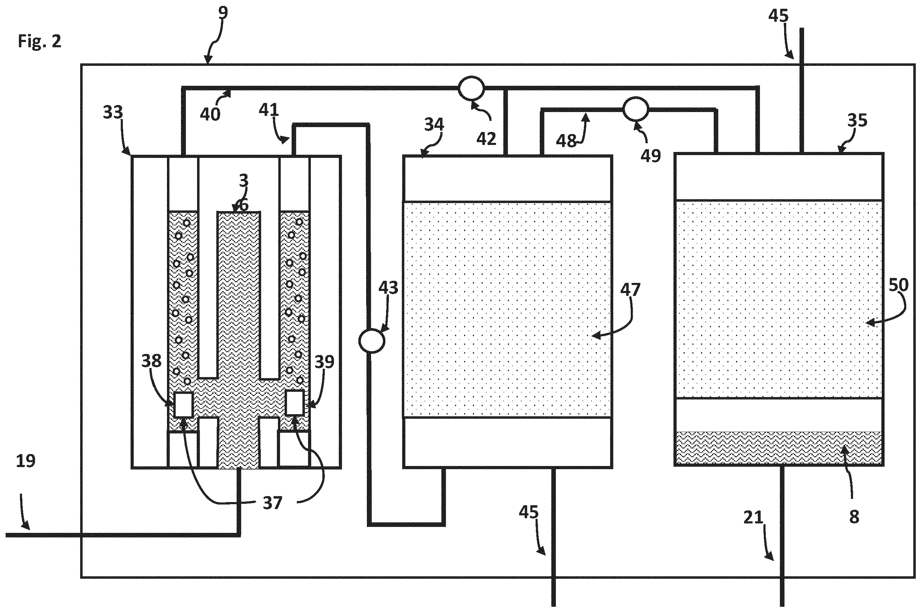

Die elektro-katalytische Einheit 9 ist in der Fig. 2 in drei Reaktionskammern aufgeteilt, wobei diese in eine Elektrolyse-Kammer 33 in eine erste Katalyse-Kammer 34 und in eine zweite Katalyse-Kammer oder Synthese-Kammer 35unterteilt sind. Über eine Leitung 19 wird mit Hilfe einer Dosierpumpe 20 das Reinigungsfluid 3 aus dem Fluidspeicher 4 in die elektro-katalytische Einheit 9 transportiert, wobei das Reinigungsfluid 3 in die Elektrolyse-Kammer 33 gelangt. Die Elektrolyse-Kammer 33 kann beispielsweise wie ein Hoffmann'scher Wasserzersetzungsapparat aufgebaut sein, wie es in diesem vorliegenden Beispiel der Fall ist. Dabei ist ein Reservoir 36 des Reinigungsfluids 3 in drei miteinander verbundene Teilkammern unterteilt. Hierbei bilden die beiden äußeren Kammern links und rechts auch die Teilkammern, die die Elektroden 37 enthalten. In der linken Teilkammer befindet sich eine Anode 38 und in der rechten Teilkammer eine Kathode 39. Beide Elektroden 37 sind über eine Gleichstromquelle miteinander verbunden. Während der Elektrolyse wird das Wasser des Reinigungsfluids 3 in Sauerstoff und Wasserstoff zersetzt. Dabei steigen die jeweiligen Gase in ihren Teilkammern auf, wobei an der Anode 38 Sauerstoff aufsteigt und aufgefangen wird und an der Kathode 39 Wasserstoff aufsteigt und aufgefangen wird.

Beide Gase werden separat über Leitungen 40, 41 und Pumpen 42, 43 in eine der nächsten Kammern transportiert, wobei der Wasserstoff in die erste Katalyse-Kammer 34 transportiert wird und der Sauerstoff in die zweite Katalyse-Kammer oder Synthese-Kammer 35. In die erste Katalyse-Kammer 34 wird neben dem Wasserstoff auch Kohlenstoffdioxid aus der Außenluft über eine Pumpe 44 oder ein Gebläse über eine dazu vorgesehene Leitungen 45 gefördert, dabei ist es von Vorteil, wenn die Luft über einen Luftfilter 46 gereinigt wird bevor diese in die elektro-katalytischen Einheit gelangt. In der ersten Katalyse-Kammer 34 befindet sich ein erster Katalysator 47, der für die in der Kammer stattfindende Reaktion vorgesehen ist. Bei der vorgesehenen Reaktion reagieren Wasserstoff und Kohlenstoffdioxid zu einem Alkan und Sauerstoff, wobei das Alkan das Hauptprodukt und Sauerstoff das Nebenprodukt ist. Von Vorteil ist, wenn Sauerstoff und Alkan getrennt voneinander aus der ersten Katalyse-Kammer 34 über Leitungen 40, 48 und mit Hilfe von Pumpen 42, 49 gebracht werden.

Sowohl das Hauptprodukt als auch das Nebenprodukt der ersten Katalyse-Kammer 34 werden in diesem Beispiel in die zweite Katalyse-Kammer oder Synthese-Kammer 35 transportiert. In der zweiten Katalyse-Kammer oder Synthese-Kammer 35 befindet sich ein für die Reaktion in dieser Kammer vorgesehener zweiter Katalysator 50. In der zweiten Katalyse-Kammer oder Synthese-Kammer 35 reagieren Alkan und Sauerstoff katalytisch zu einem Alkohol 8. Da der entstandene Alkohol 8 flüssig ist, kann dieser einfach auf den Boden der zweiten Katalyse-Kammer oder Synthese-Kammer 35 tropfen. Am Boden dieser Reaktionskammer mündet eine Leitung 21 mit einer dazugehörigen Dosierpumpe 22, mit der dann der Alkohol 8 von der zweiten Katalyse-Kammer oder Synthese-Kammer 35 in den Fluidspeicher 4 dosiert und vorzugsweise in Abhängigkeit des mit dem Alkoholsensor 17 gemessenen Alkoholanteils im Reinigungsfluid geführt werden kann. Die Alkoholproduktion bzw. die Alkoholzufuhr kann solange erfolgen, bis im Reinigungsfluid wieder ein bestimmter Alkoholgehalt gemessen wird.

## Patentansprüche

1. Kraftfahrzeug mit mehreren Sensoren (1) und einer Reinigungseinrichtung (2) zum Aufbringen eines aus einem Fluidspeicher (4) bezogenen Reinigungsfluids (3) auf Wasserbasis auf die Sensoren (1),
**dadurch gekennzeichnet,**
**dass** eine elektro-katalytische Einheit (9) zur Herstellung eines dem Reinigungsfluid (3) als Additiv zuführbaren Endprodukts in Form eines Alkohols (8) aus Wasser des Reinigungsfluids (3) und Luft als Edukte vorgesehen ist.

2. Kraftfahrzeug nach Anspruch 1,
**dadurch gekennzeichnet,**
**dass** die elektro-katalytische Einheit (9) in drei Reaktionskammern unterteilt ist, wobei die Reaktionskammern in eine Elektrolyse-Kammer (33) sowie in eine erste Katalyse-Kammer (34) und eine zweite Katalyse-Kammer oder Synthese-Kammer (35) aufgeteilt sind.

3. Kraftfahrzeug nach Anspruch 2,
**dadurch gekennzeichnet,**
**dass** in der Elektrolyse-Kammer (33) Wasserstoff (H₂) und Sauerstoff (O₂) als Produkte aus dem Wasser (H₂O) als Edukt herstellbar sind, wobei das Wasser ein Bestandteil des Reinigungsfluids (3) ist.

4. Kraftfahrzeug nach den Ansprüchen 2 und 3,
**dadurch gekennzeichnet,**
**dass** in der ersten Katalyse-Kammer (34) ein Alkan (CₙH₂ₙ₊₂) als Produkt aus Kohlenstoffdioxid (CO₂) aus der Luft und Wasserstoff (H₂) aus der Elektrolyse-Kammer (33) als Edukte herstellbar ist.

5. Kraftfahrzeug nach einem der Ansprüche 2, 3 und 4,
**dadurch gekennzeichnet,**
**dass** in der zweiten Katalyse-Kammer oder Synthese-Kammer (35) ein Alkohol (8) als Endprodukt (CₙH₂ₙ₊₂O) aus einem Alkan (CₙH₂ₙ₊₂), hergestellt in der ersten Katalyse-Kammer (34), und aus Sauerstoff (O₂) aus der Luft und/oder Elektrolyse-Kammer (33) als Edukte herstellbar ist.

6. Kraftfahrzeug nach den Ansprüchen 2 bis 5,
**dadurch gekennzeichnet,**
**dass** eine Speicherkammer zum Einspeichern des erzeugten Alkohols vorhanden ist.

7. Kraftfahrzeug nach den Ansprüchen 2 bis 6,
**dadurch gekennzeichnet,**
**dass** eine oder mehrere Pumpen (20, 22, 42, 43, 44, 49) zum Fördern der Edukte, der Produkte und des Endprodukts vorgesehen sind, wobei eine Pumpe oder ein Teil der Pumpen als Dosierpumpen (20, 22) dienen.

8. Kraftfahrzeug nach einem der vorangegangenen Ansprüche,
**dadurch gekennzeichnet,**
**dass** der Fluidspeicher (4) einen Sensor (17) aufweist, über den Alkoholanteil im Reinigungsfluid (3) erfassbar ist, wobei in Abhängigkeit eines Ermittlungsergebnisses die Alkoholherstellung in der elektro-katalytischen Einheit (9) steuerbar ist.

9. Kraftfahrzeug nach einem der vorangegangenen Ansprüche,
**dadurch gekennzeichnet,**
**dass** der Fluidspeicher (4) einen Sensor (10) aufweist, über den der Füllstand des Fluidspeichers (4) erfassbar ist, wobei in Abhängigkeit eines Ermittlungsergebnisses ein optisches und/oder akustisches Signal (12, 13) für den Nutzer des Kraftfahrzeugs ausgebbar ist.

10. Kraftfahrzeug nach einem der vorangegangenen Ansprüche,
**dadurch gekennzeichnet,**
**dass** wenigstens eine Auffangvorrichtung (23, 27, 30) zum Auffangen von Wischwasser beim Reinigen der Sensoren (1) und/oder Kondenswasser am Verdampfer (26) der Klimaanlage und/oder Regenwasser, welches dem Fluidspeicher (4) zuführbar ist, vorgesehen ist.

11. Kraftfahrzeug nach einem der vorangegangenen Ansprüche,
**dadurch gekennzeichnet,**
**dass** der Fluidspeicher (4) einen Eingang oder mehrere Eingänge und einen Ausgang oder mehrere Ausgänge aufweist, wobei dem Eingang oder zumindest einem Teil der Eingänge und dem Ausgang oder zumindest einem Teil der Ausgänge ein Flüssigkeitsfilter (16, 25, 29, 32) zugeordnet ist.

12. Verfahren zum Betreiben einer Reinigungseinrichtung (2) zur Reinigung von Sensoren (1) eines Kraftfahrzeugs nach einem der vorangegangenen Ansprüche,
**dadurch gekennzeichnet,**
**dass** in einer elektro-katalytischen Einheit (9) ein dem Reinigungsfluid (3) als Additiv zuzuführendes Endprodukt in Form eines Alkohols (8) aus Wasser des Reinigungsfluids (3) und Luft als Edukte hergestellt wird.

13. Verfahren nach Anspruch 12,
**dadurch gekennzeichnet,**
**dass** in der elektro-katalytischen Einheit (9) wenigstens ein Elektrolyse-Prozess und wenigstens ein Katalyse-Prozess oder ein Synthese-Prozess durchgeführt werden.

14. Verfahren nach Anspruch 13,
**dadurch gekennzeichnet,**
**dass** in der elektro-katalytischen Einheit (9) in einem Elektrolyse-Prozess aus Wasser (H₂O) Sauerstoff (O₂) und Wasserstoff (H₂) hergestellt werden, und in einem ersten Katalyse-Prozess ein Alkan (CₙH₂ₙ₊₂) aus Kohlenstoffdioxid (CO₂) aus der Luft und Wasserstoff (H₂) aus dem Elektrolyse-Prozess hergestellt wird, und in einem zweiten Katalyse-Prozess oder Synthese-Prozess ein Alkohol (CₙH₂ₙ₊₂O) (8) aus dem Alkan (CₙH₂ₙ₊₂) aus dem ersten Katalyse-Prozess und Sauerstoff (O₂) aus dem Elektrolyse-Prozess und/oder Luft hergestellt wird.

15. Verfahren nach Ansprüchen 12 bis 14,
**dadurch gekennzeichnet,**
**dass** der Alkoholanteil im Reinigungsfluid (3) ermittelt wird, wobei in Abhängigkeit des Ermittlungsergebnisses die Herstellung des Alkohols (8) in der elektro-katalytischen Einheit (9) gesteuert wird.

16. Verfahren nach Ansprüchen 13 bis15,
**dadurch gekennzeichnet,**
**dass** der Füllstand des Fluidspeichers (4) ermittelt wird, wobei in Abhängigkeit des Ermittlungsergebnisses ein optisches und/oder akustisches Signal (12, 13) an den Nutzer ausgegeben wird.

## Claims

1. Motor vehicle with multiple sensors (1) and a cleaning device (2) for applying a water-based cleaning fluid (3), drawn from a fluid reservoir (4), to the sensors (1),
**characterized in that**
an electrocatalytic moiety (9) is provided for producing an end product in the form of an alcohol (8), which can be supplied to the cleaning fluid (3) as an additive, from water in the cleaning fluid (3) and air as reactants.

2. Motor vehicle according to claim 1,
**characterized in that**
the electrocatalytic moiety (9) is divided into three reaction chambers, wherein the reaction chambers are divided into an electrolysis chamber (33) as well as a first catalysis chamber (34) and a second catalysis chamber or synthesis chamber (35).

3. Motor vehicle according to claim 2,
**characterized in that**
hydrogen (H₂) and oxygen (O₂) can be produced in the electrolysis chamber (33) from water (H₂O) as the reactant, wherein the water is a component of the cleaning fluid (3).

4. Motor vehicle according to claims 2 and 3,
**characterized in that**
an alkane (CₙH₂ₙ₊₂) can be produced in the first catalytic chamber (34) as a product of carbon dioxide (CO₂) from the air and hydrogen (H₂) from the electrolysis chamber (33) as reactants.

5. Motor vehicle according to any one of claims 2, 3, and 4,
**characterized in that**
in the second catalytic chamber or synthesis chamber (35), an alcohol (8) can be produced as the end product (CₙH₂ₙ₊₂O) from an alkane (CₙH₂ₙ₊₂) produced in the first catalytic chamber (34), and from oxygen (O₂) from the air and/or the electrolysis chamber (33) as reactants.

6. Motor vehicle according to claims 2 to 5,
**characterized in that**
a storage chamber for storing the produced alcohol is provided.

7. Motor vehicle according to claims 2 to 6,
**characterized in that**
one or more pumps (20, 22, 42, 43, 44, 49) are provided for conveying the reactants, the products, and the end product, wherein one pump or a portion of the pumps are used as metering pumps (20, 22).

8. Motor vehicle according to any one of the preceding claims,
**characterized in that**
the fluid reservoir (4) has a sensor (17) that detects the alcohol content in the cleaning fluid (3), wherein the alcohol production in the electrocatalytic moiety (9) can be controlled based on the detection result.

9. Motor vehicle according to any one of the preceding claims,
**characterized in that**
the fluid reservoir (4) has a sensor (10) that detects the fill level of the fluid reservoir (4), wherein, depending on the result of the detection, a visual and/or audible signal (12, 13) can be output to the user of the motor vehicle.

10. Motor vehicle according to any one of the preceding claims,
**characterized in that**
at least one collection device (23, 27, 30) is provided for collecting windshield washer fluid during cleaning of the sensors (1) and/or condensation on the evaporator (26) of the air conditioning system and/or rainwater, which can be fed to the fluid reservoir (4).

11. Motor vehicle according to any one of the preceding claims,
**characterized in that**
the fluid reservoir (4) has one inlet or a plurality of inlets and one outlet or a plurality of outlets, wherein a liquid filter (16, 25, 29, 32) is associated with the inlet or at least some of the inlets and the outlet or at least some of the outlets.

12. Method for operating a cleaning device (2) for cleaning sensors (1) of a motor vehicle according to any one of the preceding claims,
**characterized in that**
in an electrocatalytic moiety (9), an end product in the form of an alcohol (8), to be supplied to the cleaning fluid (3) as an additive, is produced from water in the cleaning fluid (3) and air as reactants.

13. Method according to claim 12,
**characterized in that**
at least one electrolysis process and at least one catalytic process or one synthesis process are carried out in the electrocatalytic moiety (9).

14. Method according to claim 13,
**characterized in that**
in the electrocatalytic moiety (9), oxygen (O₂) and hydrogen (H₂) are produced from water (H₂O) in an electrolysis process, and in a first catalytic process, an alkane (CₙH₂ₙ₊₂) is produced from carbon dioxide (CO₂) from the air and hydrogen (H₂) from the electrolysis process, and in a second catalytic process or synthesis process, an alcohol (CₙH₂ₙ₊₂O) (8) is produced from the alkane (CₙH₂ₙ₊₂) from the first catalytic process and oxygen (O₂) from the electrolysis process and/or air.

15. Method according to claims 12 to 14,
**characterized in that**
the alcohol content in the cleaning fluid (3) is determined, wherein the production of the alcohol (8) in the electrocatalytic moiety (9) is controlled based on the result of the determination.

16. Method according to claims 13 to 15,
**characterized in that**
the fill level of the fluid reservoir (4) is determined, wherein, depending on the result of the determination, a visual and/or audible signal (12, 13) is output to the user.

## Revendications

1. Véhicule automobile avec plusieurs capteurs (1) et un appareil de nettoyage (2) pour appliquer sur les capteurs (1) un fluide de nettoyage (3) provenant d'un réservoir de fluide (4) à base d'eau,
**caractérisé en ce que**
une unité électro-catalytique (9) est prévue pour la production d'un produit fini pouvant être fourni au fluide de nettoyage (3) comme additif sous la forme d'un alcool (8) à partir d'eau du fluide de nettoyage (3) et d'air comme réactifs.

2. Véhicule automobile selon la revendication 1,
**caractérisé en ce que**
l'unité électro-catalytique (9) est divisée en trois chambres de réaction, dans lequel les chambres de réaction sont réparties en une chambre d'électrolyse (33) ainsi qu'en une première chambre de catalyse (34) et une seconde chambre de catalyse ou chambre de synthèse (35).

3. Véhicule automobile selon la revendication 2,
**caractérisé en ce que**
de l'hydrogène ( H₂ ) et de l'oxygène (O₂) peuvent être produits comme produits à partir de l'eau ( H₂O ) comme réactif dans la chambre d'électrolyse (33), dans lequel l'eau est un constituant du fluide de nettoyage (3).

4. Véhicule automobile selon les revendications 2 et 3,
**caractérisé en ce que**
un alcane ( CₙH₂ₙ₊₂) peut être produit comme produit à partir du dioxyde de carbone (CO₂) à partir de l'air et de l'hydrogène ( H₂ ) de la chambre d'électrolyse (33) comme réactifs dans la chambre de catalyse (34).

5. Véhicule automobile selon l'une quelconque des revendications 2, 3 et 4,
**caractérisé en ce que**
un alcool (8) peut être produit dans la seconde chambre de catalyse ou chambre de synthèse (35) comme produit fini ( CₙH₂ₙ₊₂O ) à partir d'un alcane ( CₙH₂ₙ₊₂ ), produit dans la première chambre de catalyse (34) et à partir d'oxygène ( O₂ ) à partir de l'air et/ou de la chambre d'électrolyse (33) comme réactifs.

6. Véhicule automobile selon les revendications 2 à 5,
**caractérisé en ce que**
une chambre réservoir est présente pour le stockage de l'alcool généré.

7. Véhicule automobile selon les revendications 2 à 6,
**caractérisé en ce que**
une ou plusieurs pompes (20, 22, 42, 43, 44, 49) sont prévues pour le transport des réactifs, des produits et du produit fini, dans lequel une pompe ou une partie des pompes servent de pompes de dosage (20, 22).

8. Véhicule automobile selon l'une quelconque des revendications précédentes,
**caractérisé en ce que**
le réservoir de fluide (4) présente un capteur (17) par le biais duquel la part d'alcool dans le fluide de nettoyage (3) peut être détectée, dans lequel la production d'alcool peut être commandée dans l'unité électro-catalytique (9) en fonction d'un résultat de détermination.

9. Véhicule automobile selon l'une quelconque des revendications précédentes,
**caractérisé en ce que**
le réservoir de fluide (4) présente un capteur (10) par le biais duquel le niveau du réservoir de fluide (4) peut être détecté, dans lequel un signal (12, 13) optique et/ou acoustique peut être délivre à l'utilisateur du véhicule automobile en fonction d'un résultat de détermination.

10. Véhicule automobile selon l'une quelconque des revendications précédentes,
**caractérisé en ce que**
au moins un dispositif de collecte (23, 27, 30) est prévu pour la collecte de lave-glace lors du nettoyage des capteurs (1) et/ou d'eau de condensation au niveau de l'évaporateur (26) de la climatisation et/ou d'eau de pluie, qui peut être fournie au réservoir de fluide (4).

11. Véhicule automobile selon l'une quelconque des revendications précédentes,
**caractérisé en ce que**
le réservoir de fluide (4) présente une entrée ou plusieurs entrées et une sortie ou plusieurs sorties, dans lequel un filtre de liquide (16, 25, 29, 32) est associé à l'entrée ou au moins à une partie des entrées et à la sortie ou au moins à une partie des sorties.

12. Procédé de fonctionnement d'un appareil de nettoyage (2) pour le nettoyage de capteurs (1) d'un véhicule automobile selon l'une quelconque des revendications précédentes,
**caractérisé en ce que**
un produit fini à fournir au fluide de nettoyage (3) comme additif est produit sous la forme d'un alcool (8) à partir d'eau du fluide de nettoyage (3) et d'air comme réactifs dans une unité électro-catalytique (9).

13. Procédé selon la revendication 12,
**caractérisé en ce que**
au moins un processus d'électrolyse et au moins un processus de catalyse ou un processus de synthèse sont réalisés dans l'unité électro-catalytique (9).

14. Procédé selon la revendication 13,
**caractérisé en ce que**
dans l'unité électro-catalytique (9), de l'oxygène ( O₂ ) et de l'hydrogène ( H₂ ) sont produits dans un processus d'électrolyse de l'eau ( H₂O ), et dans un premier processus de catalyse, un alcane ( CₙH₂ₙ₊₂ ) est produit à partir de dioxyde de carbone ( CO₂ ) à partir de l'air et d'hydrogène ( H₂ ) à partir du processus d'électrolyse, et dans un second processus de catalyse ou processus de synthèse, un alcool (CₙH₂ₙ₊₂O) (8) est produit à partir de l'alcane (CₙH₂ₙ₊₂) à partir du premier processus de catalyse et de l'oxygène ( O₂ ) à partir du processus d'électrolyse et/ou de l'air.

15. Procédé selon les revendications 12 à 14,
**caractérisé en ce que**
la part d'alcool est déterminée dans le fluide de nettoyage (3), dans lequel la production de l'alcool (8) dans l'unité électro-catalytique (9) est commandée en fonction du résultat de détermination.

16. Procédé selon les revendications 13 à 15,
**caractérisé en ce que**
le niveau du réservoir de fluide (4) est déterminé, dans lequel un signal optique et/ou acoustique (12, 13) est délivré à l'utilisateur en fonction du résultat de détermination.
